Europäisches Patentamt

European Patent Office

Office européen des brevets

(11) Numéro de publication: **0 285 523**
**A1**

## DEMANDE DE BREVET EUROPEEN

(21) Numéro de dépôt: 88400803.8

(22) Date de dépôt: 01.04.88

(51) Int. Cl.4: **G 02 F 1/21**
**H 04 B 9/00**

(30) Priorité: 03.04.87 FR 8704725

(43) Date de publication de la demande:
05.10.88 Bulletin 88/40

(84) Etats contractants désignés:
DE FR GB IT NL SE

(71) Demandeur: THOMSON-CSF
173, Boulevard Haussmann
F-75379 Paris Cédex 08 (FR)

(72) Inventeur: Lefevre, Hervé
THOMSON-CSF SCPI 19, avenue de Messine
F-75008 Paris (FR)

(74) Mandataire: Turlèque, Clotilde et al
THOMSON-CSF SCPI 19, avenue de Messine
F-75008 Paris (FR)

(54) Dispositif de traitement de signal cohérent utilisant une ligne à retard optique, et son application au filtrage, produit de corrélation, et analyse spectrale.

(57) L'invention se rapporte à un dispositif de traitement de signal utilisant une fibre optique monomode comme ligne à retard.

Il comporte une source (1) et un interféromètre en anneau comportant un coupleur bidirectionnel (20) et une boucle fibre optique monomode dont les extrémités sont couplées à deux accès conjugués (C et D) du coupleur. La source (1) est reliée à l'un des accès opposés (A) et un détecteur (30) est reliée au dernier accès (B). Pour réaliser le traitement, une série de modulateurs de phase électrooptiques ($M_1$, $M_2$ ... $M_n$), séparés par des longueurs de fibre indentiques correspondant à un retard donné, sont commandés simultanément par un signal électrique impulsionnel. Le traitement est cohérent car il résulte des interférences entre deux ondes optiques ayant suivi des chemins opposés.

Application, notamment, à la réalisation de fonctions du type filtrage par traitement optique.

FIG_3

## Description

Dispositif de traitement de signal cohérent utilisant une ligne à retard optique et son application au filtrage, produit de corrélation, et analyse spectrale

L'invention se rapporte au domaine du traitement de signal, et notamment à un traitement utilisant des ondes optiques.

L'utilisation d'ondes optiques pour transmettre des informations par l'intermédiaire de guides d'ondes optiques, notamment par des fibres optiques, présente de multiples intérêts notamment du fait de la très faible sensibilité de ce type de guides aux perturbations. Au delà des simples aspects de transmission, un certain nombre d'applications de cette transmission optique de signal ont permis de mettre en évidence des propriétés intéressantes qui vont amener à l'utilisation de ces guides optiques également pour le traitement des informations transmises sur ces guides.

En particulier, l'utilisation des fibres optiques monomodes comme lignes à retard est intéressante notamment pour le traitement des signaux hyperfréquences large bande. En effet les performances de dispersion des fibres optiques, plus de 100 GHZ par kilomètre, et d'atténuation, moins de 0,5 dB par kilomètre, permettent d'envisager des produits bande passante-retard supérieurs à $5 \times 10^5$ avec des retards de l'ordre de plusieurs dizaines de microsecondes.

Les performances des fibres monomodes pour le guidage sont complètement exploitables du fait qu'on a pu mettre au point des sources de lumière et des détecteurs à semi-conducteurs III-V adaptés, ainsi que des circuits optiques intégrés réalisant les fonctions utiles, par exemple couplage ou modulation.

La société demanderesse a d'ailleurs déjà décrit dans le bulletin d'informations de son laboratoire de recherches, en décembre 1986, la réalisation d'une ligne à retard de 5 GHz de bande et 5 microsecondes de retard.

Du fait de ces grandes possibilités, l'utilisation de fibres optiques monomodes pour le traitement a déjà été envisagée notamment comme lignes à retard dans un article intitulé "Optical fiber delay line signal processing" de IEEE Transaction on Microwave Theroy and Techniques, vol. MTT 33, n°3, mars 1985. Cet article décrit notamment des lignes à prises et des lignes à re-circulation dans lesquelles la fibre optique ou des boucles de celle-ci sont utilisées pour introduire des retards sur le signal transmis. Les lignes à retard ainsi constituées combinent de manière incohérente les signaux issus des différentes prises aménagées à cet effet le long de la ligne à retard.

En théorie la porteuse optique pourrait être utilisée pour du traitement cohérent, mais dans ce cas il faudrait que les phases relatives de la porteuse optique à chacune des prises de signal soient stables jusqu'à une fraction de la longueur d'onde optique. Cela requérerait un spectre de source étroit, très stable ; de plus les différences de chemin optique devraient également être constantes jusqu'à une fraction de la longueur d'onde. Pour cette raison la détection cohérente, qui dépend de la phase de la porteuse optique, n'est pas mise en oeuvre dans les dispositifs utilisant des lignes à retard à fibres monomodes.

Seule la sommation incohérente par des détecteurs quadratiques, est possible, et la pondération éventuellement négative des signaux issus des différentes prises sur une ligne à retard à fibre optique monomode, pour réaliser des fonctions de filtrage, ne peut pas être accomplie optiquement.

L'invention a pour objet un dispositif de traitement de signal avec ligne à retard optique, qui autorise un traitement cohérent du signal transmis et qui donc évite les inconvénients des systèmes où seule la détection quadratique est possible, et ouvre de grandes possibilités d'applications.

Selon l'invention, un dispositif de traitement de signal utilisant une fibre optique monomode, est caractérisé en ce que, pour effectuer un traitement cohérent, le dispositif comporte un interféromètre en anneau dont l'anneau est la fibre optique monomode, les deux extrémités de la fibre étant couplées à deux accès d'un coupleur bidirectionnel, à un autre accès duquel est couplée une source destinée à fournir une onde optique continue, les deux ondes optiques contrarotatives dans l'anneau étant combinées en sortie dans le coupleur pour former des interférences analysées par un détecteur couplé au quatrième accès du coupleur, un modulateur de phase électrooptique placé à une extrémité de la fibre introduisant un déphasage préétabli au rythme du temps de parcours dans la fibre pour fixer le point de fonctionnement sur la réponse sinusoïdale de l'interféromètre en fonction du déphasage, le dispositif de traitement comportant en outre des modulateurs de phase commandés par les signaux à traiter placés sur la fibre.

Dans un premier mode de réalisation particulièrement adapté au filtrage, une série de modulateurs de phase sont équirépartis sur la fibre et commandés par le même signal pour réaliser des fonctions de filtrage, l'interféromètre étant placé à un point de fonctionnement où sa caractéristique est linéaire.

Dans un autre mode de réalisation deux modulateurs de phase sont disposés à proximité des deux extrémités de la fibre et commandés par des signaux différents dont on souhaite faire le produit, l'interféromètre étant placé à un point de fonctionnement où sa caractéristique est quadratique, pour réaliser des fonctions de corrélation ou effectuer une analyse spectrale.

L'invention sera mieux comprise et d'autres caractéristiques apparaîtront à l'aide de la description qui suit en référence aux figures annexées.

- La figure 1 représente une ligne à retard à prise utilisant une fibre optique, selon l'art antérieur ;

- La figure 2 est une ligne à re-circulation, utilisant une fibre optique, selon l'art antérieur ;

- La figure 3 est un dispositif de traitement selon l'invention dans un premier mode de réalisation ;

- La figure 4 est un second mode de réalisation du dispositif de traitement utilisant une ligne à retard à fibre optique selon l'invention ;

- La figure 5 est un diagramme de signaux explicatifs ;

- La figure 6 représente un mode de réalisation d'un modulateur M ;

- La figure 7 représente la réponse sinusoïdale de l'interféromètre ;

- La figure 8 représente un troisième mode de réalisation du dispositif de traitement selon l'invention.

Le dispositif de traitement de signal utilisant une ligne à retard à prises, à fibre optique, selon l'art antérieur comporte une source 1 qui émet une impulsion d'onde optique à laquelle est couplée une fibre optique monomode 10 sur laquelle sont réparties un certain nombre de prises $P_0$, $P_1$, $P_2$ ... $P_n$ équidistantes, le retard introduit entre deux prises consécutives, $P_i$ et $P_{i+1}$, étant égal à $\tau$ ; les signaux issus de ces différentes prises sont transmis via des atténuateurs respectivement $A_0$, $A_1$, $A_2$ .... $A_n$ aux entrées d'un détecteur quadratique 30. Le signal de sortie de ce détecteur quadratique est donc la somme, pondérée par les atténuateurs $A_0$ ... $A_n$, des signaux issus des différentes prises $P_0$ ... $P_n$ successivement retardés de $\tau$.

Comme indiqué ci-dessus, le défaut d'un tel dispositif de traitement est qu'il ne peut traiter que des signaux positifs, éventuellement en les pondérant, du fait du type de détection utilisable. En conséquence la pondération par des coefficients négatifs est exclue pour ce type de système, sauf en utilisant des artifices par lesquels les sorties des différentes prises sont combinées dans l'un ou l'autre de deux détecteurs selon qu'ils doivent être affectés d'un coefficient positif ou négatif, les sorties de ces deux détecteurs étant alors combinées avec des signes différents.

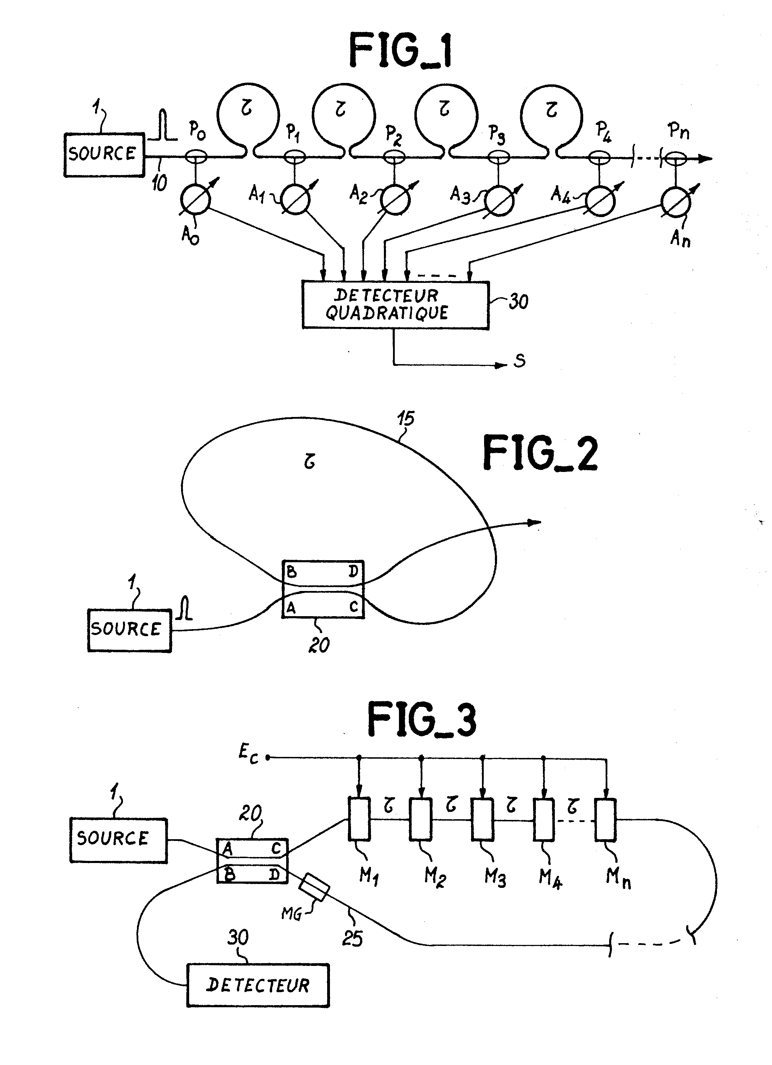

La figure 2 représente une ligne à retard à fibre optique, dite à re-circulation, selon l'art antérieur. Cette structure comporte une source 1 qui émet une impulsion d'onde optique, une boucle de fibre optique 15 et un coupleur directionnel 20 arrangé de la manière suivante : la source 1 est reliée au premier accès A du coupleur, la boucle de fibre optique est branchée entre un accès opposé C du coupleur et l'accès conjugué de A,B, et la sortie du dispositif s'effectue sur le second accès opposé D. Ainsi au premier passage une fraction de l'onde optique est transmise à la sortie D tandis que l'autre fraction parcourt la boucle 15. Au second passage une fraction de l'onde optique est transmise à la sortie D et l'autre partie re-circule dans la boucle 15 etc... On obtient ainsi, entre les impulsions de sortie, des retards strictement égaux puisque le trajet optique est le même.

Comme le dispositif représenté sur la figure 1, celui représenté sur la figure 2 ne permet pas d'effectuer sur le signal un traitement cohérent.

La figure 3 représente un premier mode de réalisation du dispositif de traitement de signal selon l'invention. Ce dispositif comporte une source 1 destinée à émettre une onde optique continue, reliée à un premier accès A d'un coupleur bidirectionnel (à fibre ou optique intégrée par exemple) 20. Aux deux accès opposés C et D du coupleur directionnel 20 sont reliées les deux extrémités d'une boucle de fibre optique monomode 25 à une extrémité de laquelle sont montés en série le long de la fibre optique des modulateurs électrooptiques $M_1$, $M_2$, etc... $M_n$ ; deux modulateurs $M_i$, $M_{i+1}$ successifs sont reliés par des morceaux de fibre optique de longueurs identiques introduisant un retard égal à $\tau_{i,i+1}$. Ces modulateurs sont commandés par un signal électrique de commande impulsionnel appliqué à l'entrée $E_C$. Un modulateur de phase $M_G$, commandé par un signal de période égale au temps de propagation dans la fibre, est placé sur la fibre à l'autre extrémité pour introduire un déphasage fixe entre les deux ondes contra-rotatives circulant dans la fibre, fixant le point de fonctionnement. Un détecteur 30 est branché au quatrième accès B du coupleur 20. Cette structure est celle d'un interféromètre en anneau, dans l'anneau duquel sont placés en série plusieurs modulateurs de phase en optique intégrée, séparés par des retards $\tau_{i,i+1}$. Typiquement $\tau = 5$ nanosecondes pour un mètre de fibre optique. Ces modulateurs, commandés par le même signal de commande impulsionnel, vont introduire des déphasages impulsionnels espacés de $\tau$ sur le signal continu transmis dans la boucle. Lorsque les signaux repassent sur le coupleur bidirectionnel où les ondes interfèrent, les déphasages pourront s'ajouter ou se soustraire sur le détecteur quadratique dans la limite de la zone de linéarité de la réponse sinusoïdale de l'interféromètre fixée par le modulateur $M_G$. Par rapport au système antérieur comportant une ligne à prises du type de celle décrite sur la figure 1, les possibilités de traitement sont beaucoup plus importantes.

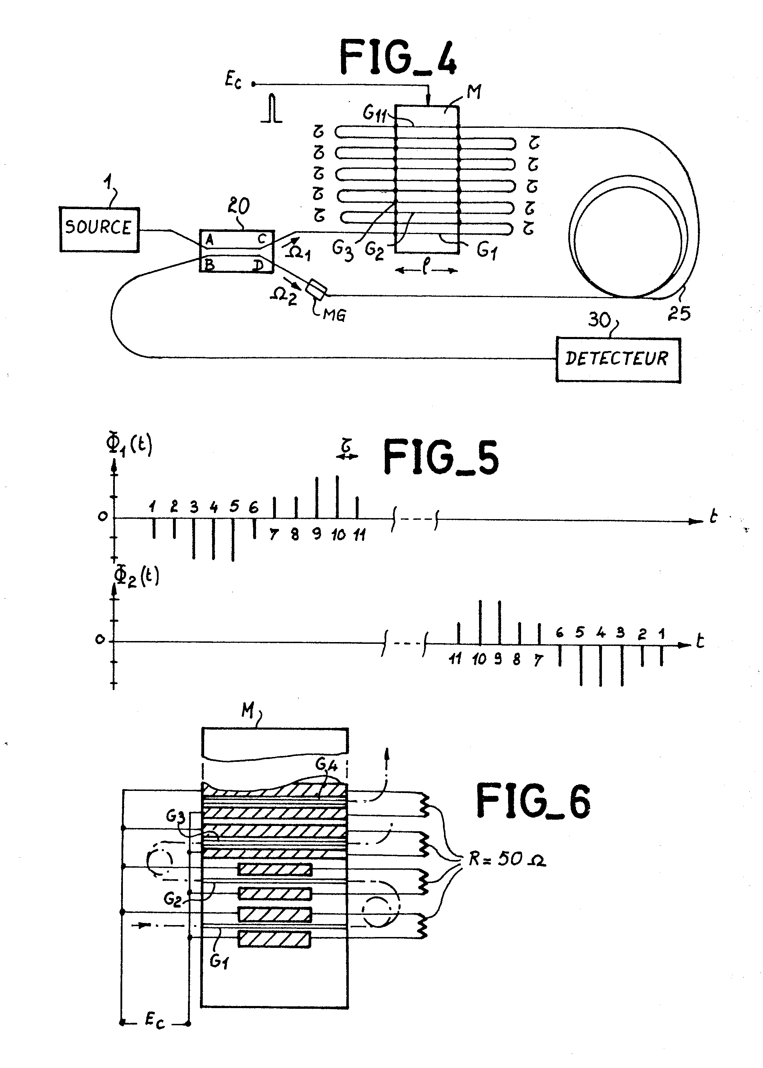

La figure 4 représente un mode particulier de réalisation du dispositif de traitement de signal cohérent selon l'invention. Il comporte comme le précédent une source 1, un coupleur bidirectionnel 20, une bobine de fibre optique monomode 25 à une extrémité duquel sont placés en série sur la fibre optique des modulateurs élémentaires, et à l'autre extrémité duquel est placé le modulateur $M_G$. Mais dans ce mode de réalisation les modulateurs sont tous réalisés sur le même circuit M. Ce circuit est un circuit optique intégré de largeur $l = 10$ à $20$ mm, selon la modulation de phase souhaitée, et à la surface duquel sont prévus des guides optiques, $G_1$, $G_2$ ... $G_n$, $n = 11$ sur la figure, munis d'électrodes de commande disposées de manière classique de part et d'autre du guide, et non représentées sur la figure, pour l'introduction d'un déphasage du fait du champ électrique appliqué aux guides. Des morceaux de fibre optique de longueur adaptée au retard $\tau$ à introduire entre deux modulateurs relient la sortie d'un guide à l'entrée du suivant, par exemple selon la configuration représentée sur la figure 4, où la sortie d'un modulateur et l'entrée du modulateur suivant sont réalisées sur une même face latérale du circuit optique intégré. Cette disposition n'est pas limitative et toutes les entrées des modulateurs pourront être disposées sur la même face latérale du circuit optique intégrée et toutes les sorties sur l'autre face, des boucles de fibre optique étant adaptées en conséquence. Comme précédemment l'accès du coupleur directionnel situé du même côté que la source est relié à un détecteur 30.

Le signal électrique appliqué à l'entrée de commande $E_C$ est une impulsion électrique qui introduit une modulation de phase de l'onde optique simultanément sur l'onde lumineuse se propageant sur la figure optique, et donc à des instants espacés de $\tau$ sur l'onde optique continue transmise par la source. La longueur des électrodes de chacun des modulateurs élémentaires, qu'ils soient réalisés indépendamment ou réalisés sur le même circuit optique intégré détermine le déphasage appliqué, et le sens de ce déphasage est fixé par le sens du champ électrique appliqué à ces électrodes. Par une configuration particulière des électrodes il est donc possible d'obtenir des déphasages $\varphi_{1(t)}$ et $\varphi_{2(t)}$ sur les deux ondes $\Omega_1$ et $\Omega_2$ contra-rotatives dans la boucle de fibre 25. Un exemple de ces déphasages est représenté sur la figure 5 : l'onde $\Omega_1$ subit d'abord une modulation par le modulateur réalisé à partir du guide $G_1$ alors que l'onde contra-rotative $\Omega_2$ subit d'abord un déphasage par le modulateur réalisé à partir du guide $G_{11}$. La modulation peut être analogique ou par quanta, c'est-à-dire que les décalages de phase peuvent être quelconques pourvu que l'on reste dans la partie linéaire de la caractéristique puissance du signal de sortie résultant des interférences en fonction de la phase, dont la variation est sinusoïdale en fonction de la différence de phase entre les deux ondes quand l'interféromètre est placé au biais :

$P(\Delta \varphi) = P_M (1 + \sin \Delta \varphi)$ et $\Delta \varphi = \varphi_1 - \varphi_2$, où $P_M$ est la puissance maximale de sortie.

La figure 6 représente partiellement un mode de réalisation du modulateur M où les électrodes de commande des modulateurs de phase ont été représentées, en supposant que les déphasages appliqués sont ceux représentés sur la figure 5.

Pour la réalisation des modulateurs, quelques précautions doivent être prises pour que la capacité parasite introduite par les électrodes de commande du modulateur ne vienne pas limiter la bande passante. Pour cela, la configuration la mieux adaptée est celle représentée sur la figure 6, où le champ électrique est appliqué entre les deux extrémités des électrodes, dans le sens de propagation de l'onde optique, les deux autres extrémités étant chargées sur une résistance de charge R = 50 ohms de façon à réaliser une ligne adaptée. Chaque guide $G_1$, $G_2$, $G_3$, $G_4$ est associé à des électrodes de commande convenablement configurées. Ces électrodes de commande sont interconnectées. Dans l'exemple représenté la tension de commande a le même sens pour les quatre premiers modulateurs.

L'invention n'est pas limitée aux modes de réalisation décrits et représentés. En particulier dans le mode de réalisation représenté sur la figure 3, il est possible d'effectuer une pondération en appliquant au signal de commande des différents modulateurs une pondération au moyen d'atténuateurs du signal impulsionnel électrique de commande.

Il est également possible d'effectuer un traitement avec des signaux de commande différents appliqués aux différents modulateurs $M_1$, $M_2$ ...

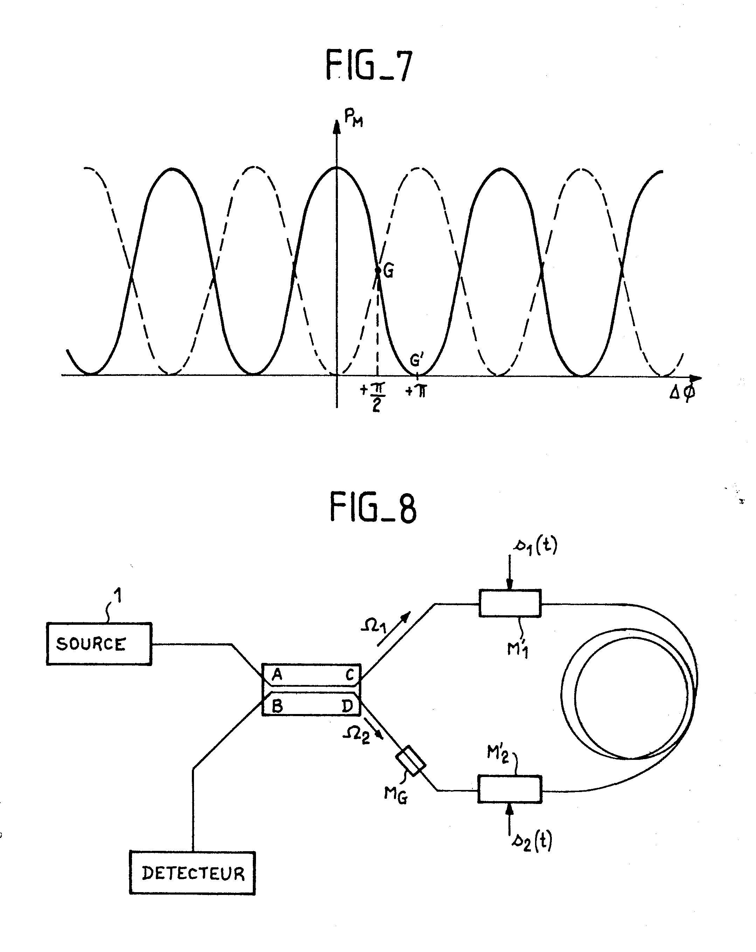

Dans les modes de réalisation du dispositif de traitement de signal utilisant une ligne à retard décrits ci-dessus, on utilise la partie linéaire de la réponse sinusoïdale de l'interféromètre représentée sur la figure 7 pour détecter des différences de phase. Pour cela, l'interféromètre est placé "au biais" dans la zone linéaire, c'est-à-dire qu'un modulateur de phase, $M_G$, placé à une extrémité de la fibre crée une modulation de phase supplémentaire alternativement de

$+ \frac{\pi}{4}$ et $- \frac{\pi}{4}$, au rythme du temps de parcours de la fibre et donc un déphasage supplémentaire égal à $\frac{\pi}{2}$ qui place le point de fonctionnement de l'interféromètre au point G de la réponse sinusoïdale, figure 7, les variations de phase se traduisant par des variations de puissance autour de ce point.

Il est également possible d'utiliser la partie non linéaire de la réponse sinusoïdale de l'interféromètre pour détecter des signaux dont le traitement a été réalisé à haute fréquence, par exemple autour de 10 GHz, dans une bande de fréquence plus faible, 10 à 100 MHz par exemple. Ce traitement utilisant la partie quadratique de la réponse de l'interféromètre en fonction de la phase s'applique par exemple à la réalisation de fonctions telles que l'inter-corrélation, l'auto-corrélation ou l'analyse de spectre.

En effet, il a été indiqué dans l'exemple ci-dessus que les modulateurs de phase répartis le long de la fibre étaient commandés par le même signal. Mais ces modulateurs, et notamment deux modulateurs placés aux deux extrémités de la fibre optique peuvent être commandés par des signaux différents, $s_1(t)$ et $s_2(t)$. La figure 8 illustre un mode de réalisation du dispositif de traitement selon l'invention : une source 1 est reliée au premier accès A d'un coupleur 3dB, 20, qui répartit l'onde optique incidente entre les deux extrémités d'une boucle de fibre optique 25, elles-mêmes couplées aux accès C et D du coupleur 20. Deux modulateurs de phase $M'_1$ et $M'_2$ commandés par des signaux électriques respectivement $s_1(t)$ et $s_2(t)$ créent des modulations de phase respectivement $\varphi_1(t)$ et $\varphi_2(t)$. Lorsqu'une modulation supplémentaire est appliquée, telle qu'en l'absence de signaux $s_1$ et $s_2$ la différence de phase entre les deux ondes contra-rotatives est ©, c'est-à-dire que le point de fonctionnement sur la caractéristique de la figure 7 est G', l'intensité de la lumière sur le détecteur 30 couplé au quatrième accès, B, du coupleur 20 est fonction du produit $\varphi_1(t).\varphi_2(t)$.

En conséquence, si la détection est faite dans une bande passante faible (par exemple 100 MHz) et que les signaux $s_1(t)$ et $s_2(t)$ sont à fréquence élevée (par exemple 10 GHz), l'intensité détectée est fonction de

$$\int_{t_d} \varphi_1(t)\varphi_2(t)dt$$

où $t_d$ est le temps de réponse du détecteur.

Cette structure permet une détection faible bande (B = 1/tb) pour des signaux dont le traitement est fait à plus haute fréquence, 10GHz par exemple. Cette détection faible bande permet de limiter le bruit photonique (au niveau de la photodiode détecteur).

Pour que le déphasage à la sortie de l'interféromètre ne dépende que de $s_1(t-\tau_1)$ et $s_2(t-\tau_2)$, où $\tau_1$ est le temps de propagation entre l'accès C et le modulateur $M'_1$ et où $\tau_2$ est le temps de propagation entre l'accès D et le modulateur $M'_2$ la fibre optique 25, entre $M'_1$ et $M'_2$ peut être une fibre à forte dispersion de sorte que l'information appliquée via $s_1(t)$ sur l'onde parcourant la fibre dans le sens "-" soit filtrée, et de même pour l'information appliquée via $s_2(t)$ sur l'onde parcourant la fibre dans le sens "+".

Il est aussi possible d'ajouter dans la boucle un autre élément à forte dispersion.

Enfin, pour améliorer le rapport signal/bruit, l'onde optique peut être amplifiée par tout moyen connu. Cette amplification, dans la boucle, ou même en aval, peut être par exemple réalisée par effet "RAMAN" stimulé (par transfert d'énergie d'un signal de pompe à l'onde optique), par amplification optique à semi-conducteurs, ou encore par couplage d'ondes.

Pour une application à l'analyse de spectre :
$s_1(t) = s(t)$, signal à analyser
$s_2(t) = \cos \omega t$ (ou $\sin \omega t$)
où $\omega = 2©(f+f't)$, pour une modulation de fréquence en rampe, le signal à la sortie du détecteur est de la forme :
$$S(t) = S_0 - \int_\mathcal{T} s(t) \cos \omega t \, dt$$
Ce signal est donc directement lié à la transformée de Fourier de $s(t)$ :
$$\int_\mathcal{T} s(t) \cos (\omega t) dt$$

Il est possible d'obtenir la partie réelle ou la partie imaginaire de la transformée de Fourier en utilisant deux circuits semblables.

Les ordres de grandeur peuvent être les suivants, avec les technologies existantes :
. F = 5 à 15 GHz
. R la résolution
. T le temps de balayage : $T \simeq \frac{\Delta F}{R^2}$   . SNR : le rapport signal sur bruit,

    1) si la puissance disponible sur le détecteur est de l'ordre de 1μW, R = 100 MHz, T = 1μs et SNR = 30 si on reste dans la partie quadratique de la réponse de l'interféromètre, à mieux que 2%.

    2) Si la puissance disponible sur le détecteur est de l'ordre de 10μW, E = 10 MHz et SNR $\simeq$ 300, toujours en restant dans la partie quadratique de la réponse de l'interféromètre, à mieux que 2%.

Lorsque le temps de balayage T est supérieur à la durée du signal à analyser, la structure représentée sur la figure 3 à plusieurs modulateurs commandés par un même signal, soit $s(t)$, peut être associée à la structure représentée sur la figure 8 pour permettre de répéter le signal, à un rythme égal au temps de propagation entre modulateurs, un nombre de fois égal au nombre de modulateurs : Pour cela le modulateur $M'_1$ recevant $s(t)$ est remplacé par une suite de modulateurs recevant tous le signal $s(t)$, et un autre modulateur reçoit $\cos(\omega t)$ avec $\omega = 2©(f+f't)$.

Le modulateur $M_G$ représenté sur les figures 3, 4 et 8 peut en pratique être intégré avec le coupleur bidirectionnel 20, le dispositif utilisant ainsi un circuit optique intégré multifonctions.

## Revendications

1. Dispositif de traitement de signal utilisant une fibre optique monomode, caractérisé en ce que, pour effectuer un traitement cohérent, le dispositif comporte un interféromètre en anneau dont l'anneau est la fibre optique monomode (25), les deux extrémités de la fibre étant couplées à deux accès (C et D) d'un coupleur bidirectionnel (20), à un autre accès (A) duquel est couplée une source (1) destinée à fournir une onde optique continue, les deux ondes optiques contra-rotatives dans l'anneau étant combinées en sortie dans le coupleur pour former des interférences analysées par un détecteur (30) couplé au quatrième accès (B) du coupleur, un modulateur de phase électrooptique ($M_G$) placé à une extrémité de la fibre introduisant un déphasage préétabli au rythme du temps de parcours dans la fibre pour fixer le point de fonctionnement sur la réponse sinusoïdale de l'interféromètre en fonction du déphasage, le dispositif de traitement comportant en outre des modulateurs de phase commandés par les signaux à traiter placés sur la fibre.

2. Dispositif de traitement de signal utilisant une fibre optique monomode selon la revendication 1, caractérisé en ce que, pour effectuer un traitement cohérent utilisant la fibre optique comme ligne à retard, les modulateurs de phase électrooptiques ($M_1$, $M_2$, ... $M_n$) sont disposés en série sur la fibre, la sortie de l'un étant reliée à l'entrée du suivant par un morceau de fibre optique monomode de longueur prédéterminée pour introduire un retard donné, tous les modulateurs étant commandés simultanément par un même signal de commande impulsionnel, l'interféromètre étant placé à un point de fonctionnement autour duquel sa caractéristique est linéaire.

3. Dispositif selon la revendication 2, caractérisé en ce que les modulateurs ($M_1$, $M_2$, ... $M_n$) sont réalisés sur un même circuit optique intégré qui comporte autant de guides d'onde séparés ($G_1$, $G_2$ ... $G_n$) que de modulateurs, des électrodes de commande étant disposées de part et d'autre de chaque guide, et les morceaux de fibre optiques monomodes séparant les modulateurs étant couplés aux extrémités des guides ($G_1$ ... $G_n$).

4. Dispositif selon l'une des revendications 2 et 3, caractérisé en ce que pour assurer au dispositif de traitement une large bande, les électrodes de commande des modulateurs ont la forme de lignes adaptées.

5. Dispositif selon la revendication 4, caractérisé en ce que les configurations des électrodes et le sens de la tension appliquée sont définis pour effectuer une pondération souhaitée.

6. Dispositif selon l'une quelconque des revendications précédentes, caractérisé en ce que la longueur de la boucle de fibre optique entre la sortie du dernier modulateur ($M_n$) et l'accès correspondant (D) du coupleur est tel que le temps de propagation y est au moins égal au temps de propagation entre l'autre accès (C) du coupleur et la sortie de ce dernier modulateur ($M_n$), les suites d'impulsions de modulation de phase résultant des modulations appliquées aux ondes contra-rotatives étant alors séparées dans le temps et détectables indépendamment par le détecteur (30).

7. Application du dispositif selon l'une des revendications 2 à 6 au filtrage de signaux.

8. Dispositif de traitement de signal selon la revendication 1, caractérisé en ce que les modulateurs de phase ($M'_1$, $M'_2$) sont commandés par des signaux différents ($s_1(t)$, $s_2(t)$), l'interféromètre étant placé à un point de fonctionnement autour duquel sa caractéristique est quadratique.

9. Dispositif selon la revendication 1 caractérisé en ce que le modulateur ($M_G$) introduisant un déphasage préétabli est intégré avec le coupleur bidirectionnel dans un circuit optique intégrée multifonctions.

10. Application du dispositif selon la revendication 8 à la détermination de produits de corrélation.

11. Application du dispositif selon la revendication 8 à l'analyse spectrale.

0285523

# FIG_1

# FIG_2

# FIG_3

**FIG_4**

**FIG_5**

$\Phi_1(t)$

$\Phi_2(t)$

**FIG_6**

$R = 50\,\Omega$

0285523

## FIG_7

## FIG_8

Office européen
des brevets

**RAPPORT DE RECHERCHE EUROPEENNE**

Numero de la demande

EP  88 40 0803

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.4) |
|---|---|---|---|
| A | IEEE TRANSACTIONS ON MICROWAVE THEORY AND TECHNIQUES, vol. MTT-33, no. 3, mars 1985, pages 193-210, IEEE; K.P. JACKSON et al.: "Optical fiber delay-line signal processing" * Chapitre IV C * | 1 | G 02 F 1/21<br>H 04 B 9/00 |
| A | JOURNAL OF LIGHTWAVE TECHNOLOGY, vol. LT-4, no. 7, juillet 1986, pages 852-857, IEEE, New York, US; W.A. STALLARD et al.: "Integrated optic devices for coherent transmission" * Chapitres I, II * | 1 | |
| A | PATENT ABSTRACTS OF JAPAN, vol. 9, no. 58 (P-341)[1781], 14 mars 1985; & JP-A-59 195 220 (MASAYUKI IZUTSU) 06-11-1984 | 1 | |

| | DOMAINES TECHNIQUES RECHERCHES (Int. Cl.4) |
|---|---|
| | G 02 F 1/00<br>H 04 B 9/00<br>G 02 B 6/00<br>G 01 C 19/00<br>H 03 H 1/00<br>H 03 H 15/00 |

Le présent rapport a été établi pour toutes les revendications

| Lieu de la recherche | Date d'achèvement de la recherche | Examinateur |
|---|---|---|
| LA HAYE | 13-07-1988 | DIOT P.M.L. |

EPO FORM 1503 03.82 (P0402)